# EUROPEAN PATENT SPECIFICATION

(11) **EP 4 353 066 B1**
(45) Date of publication and mention of the grant of the patent: **01.07.2026**
(21) Application number: 23194777.1
(22) Date of filing: 01.09.2023
(51) Int. Cl.: A01D 34/416

(54) **STRING TRIMMER HEAD**
FADENSCHNEIDERKOPF
TÊTE DE TONDEUSE À FIL

(30) Priority: 13.10.2022 CN 202211251099
(43) Date of publication of application: 17.04.2024
(73) Proprietor: Nanjing Chervon Industry Co., Ltd., Nanjing, Jiangsu 211106 (CN)
(72) Inventor: GUO, Jianpeng, Nanjing, Jiangsu (CN)
(74) Representative: Sun, Yiming

(56) References cited:
- CN-A- 111 096 141
- US-A- 4 419 822
- US-A1- 2016 183 452
- US-A1- 2018 098 492
- US-A1- 2020 128 728
- US-A1- 2021 378 173
- US-B2- 7 797 839

## Description

### TECHNICAL FIELD

The present invention relates to a garden tool and, in particular, to a string trimmer head and a string trimmer.

### BACKGROUND

As a garden tool, a string trimmer is especially suitable for trimming grass such as a villa lawn and a garden lawn. The string trimmer includes a string trimmer head and a string trimmer line, where the string trimmer head drives the string trimmer line to rotate at a high speed to cut vegetation. Generally, a spool for the string trimmer line to be wound around is provided in the string trimmer head. Currently, some string trimmers on the market have the functions of automatic line release and automatic line winding, that is, the string trimmer head may automatically wind the string trimmer line onto the spool and may automatically release the string trimmer line from the spool after the string trimmer line becomes shorter due to wear. However, in some working environments, the automatic line winding function of the string trimmer may fail for reasons such as a motor failure. At this time, the maintenance of the string trimmer head will prolong a working time and reduce working efficiency.

US2016183452A1 discloses a hand-held cutting device that includes an elongated member graspable along a portion thereof by an operator, a trimmer head disposed at one end of the elongated member, and a power unit operably coupled to the trimmer head to selectively cause rotation of the trimmer head.

This part provides background information related to the present invention, which is not necessarily the existing art.

### SUMMARY

An object of the present invention is to solve or at least alleviate part or all of the preceding problems. Therefore, an object of the present invention is to provide a string trimmer head of an automatic line release type that supports a manual line winding function and a string trimmer including the string trimmer head.

To achieve the preceding object, the present invention is set forth in the appended claims.

### BRIEF DESCRIPTION OF DRAWINGS

FIG. 1 is a perspective view of a string trimmer of the present invention;
FIG. 2 is an exploded view of a string trimmer head and a drive device of the string trimmer of FIG. 1;
FIG. 3 is an exploded view of a string trimmer head of the string trimmer of FIG. 1;
FIG. 4 is an exploded view of a string trimmer head of the string trimmer of FIG. 1 from another angle;
FIG. 5 is a perspective view of a spool and a transmission member of the string trimmer of FIG. 3;
FIG. 6 is a cross-sectional view of a head housing, a spool, and a transmission member of the string trimmer of FIG. 3 in a trimming state;
FIG. 7 is a cross-sectional view of a head housing, a spool, and a transmission member of the string trimmer of FIG. 3 in a line release state;
FIG. 8 is a perspective view of a spool of the string trimmer of FIG. 3;
FIG. 9 is a perspective view of a lower housing of a head housing of a string trimmer of the present invention;
FIG. 10 is a plan view of the lower housing of FIG. 9; and
FIG. 11 is a plan view of a lower housing of a head housing of another string trimmer of the present invention.

### DETAILED DESCRIPTION

Before any examples of this invention are explained in detail, it is to be understood that this invention is not limited to its application to the structural details and the arrangement of components set forth in the following description or illustrated in the above drawings.

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this invention generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. **In** addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, an assembly, or a combination of members.

In this invention, the terms "up", "down", "left", "right", "front", and "rear" " and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

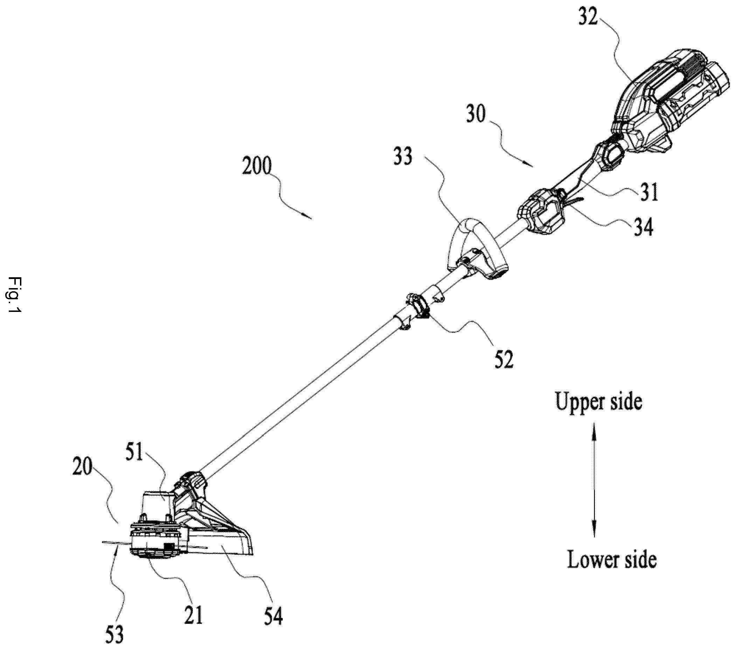

A string trimmer 200 shown in FIG. 1 includes a string trimmer head 20, a drive device 51, an operating device 30, and a connecting device 52.

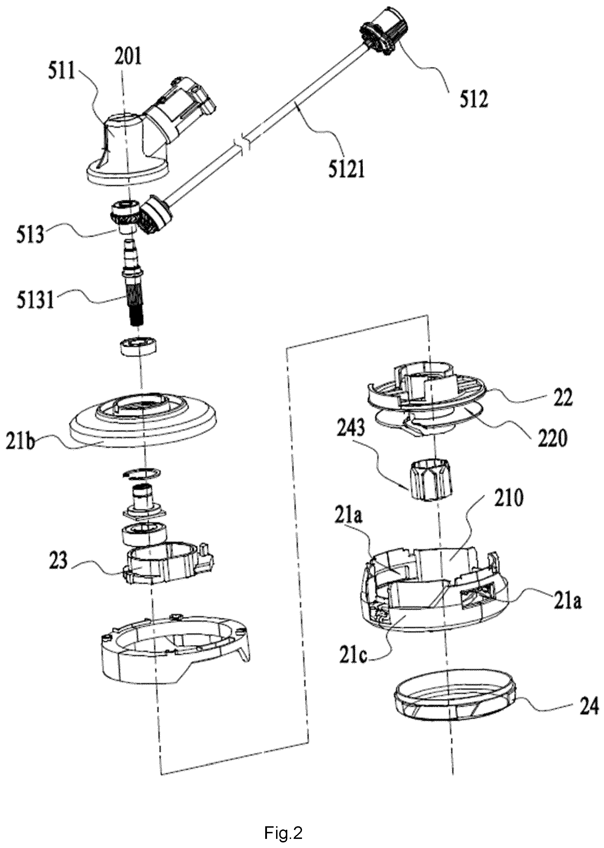

As shown in FIG. 1, the string trimmer head 20 is used for mounting a string trimmer line 53 to implement a trimming function, where the string trimmer line 53 is used for trimming, and the string trimmer head 20 is used for driving the string trimmer line 53 to rotate at a high speed to cut vegetation such as grass and trees. As shown in FIGS. 1 and 2, the drive device 51 is used for providing power for the string trimmer head 20 to rotate, the drive device 51 includes a first housing 511 and a motor 512, the first housing 511 is used for connecting the operating device 30, and the motor 512 is used for driving the string trimmer head 20 to rotate about a central axis 201 of a head housing 21.

As shown in FIGS. 1 to 3, the operating device 30 includes a handle 31, a second housing 32, an auxiliary handle 33, and a main switch 34. The handle 31 and the auxiliary handle 33 are held by hands of a user separately so that the string trimmer 200 can be operated more stably. The main switch 34 may be disposed on the handle 31, and the user can directly operate the main switch 34 when holding the handle 31 to control the string trimmer 200 to trim grass. The second housing 32 is used for forming a coupling portion for coupling a power supply device. For example, the coupling portion can couple a battery pack to supply power to the string trimmer 200. In some examples, the handle 31 and the second housing 32 are formed separately. It is to be understood that in some other examples, the handle 31 may be integrally formed with the second housing 32. In some examples, the motor 512 is disposed in the first housing 511. In some other examples, the motor 512 may be disposed in the second housing 32, the drive device 51 also includes a transmission device 513, the transmission device 513 is disposed in the first housing 511, and the motor 512 drives, through the transmission device 513, the string trimmer head 20 to rotate about the central axis 201 of the head housing 21. The connecting device 52 includes a connecting rod for connecting the first housing 511 to the second housing 32. The auxiliary handle 33 is mounted to the connecting rod, and the auxiliary handle 33 is disposed between the first housing 511 and the second housing 32. The string trimmer 200 further includes a shield 54 at least partially distributed around the string trimmer head 20. When the string trimmer head 20 is trimming grass, the shield 54 can prevent grass crumbs from flying towards where the user stands.

To facilitate the description of technical solutions of the present invention, an upper side and a lower side are defined, as shown in FIG. 1, where the drive device 51 is disposed on the upper side of the string trimmer head 20, and the string trimmer head 20 is disposed on the lower side of the drive device 51.

As shown in FIGS. 2 to 4, the string trimmer head 20 includes the head housing 21, a spool 22, an automatic line release device 23, and an operating member 24. The head housing 21 is formed with an accommodation space 210 around the central axis 201 of the head housing 21, where the accommodation space 210 can accommodate at least part of the spool 22. The head housing 21 may include an upper housing 21b and a lower housing 21c, where the upper housing 21b and the lower housing 21c together surround the accommodation space 210. A side of the head housing 21 where the accommodation space 210 is formed is an inner side of the head housing 21, and the other side of the head housing 21 opposite to the inner side is an outer side. The spool 22 is disposed in the accommodation space 210, that is to say, the spool 22 is disposed on the inner side of the head housing 21. The spool 22 may include a winding groove 220 for winding the string trimmer line 53. The automatic line release device 23 is used for making the string trimmer head 20 release the string trimmer line 53 and configured to enable the spool 22 and the head housing 21 to generate a first relative rotation so that the spool 22 releases the string trimmer line 53. The operating member 24 is configured to be operable by the user to drive the spool 22 and the head housing 21 to generate a second relative rotation so that the string trimmer line 53 is wound into the winding groove 220. The operating member 24 may be connected to the spool 22 and at least partially extend to the outer side of the head housing 21 to be operated by the user.

The string trimmer 200 has an automatic winding mode, a manual winding mode, and a trimming mode. Of course, it may also be considered that the string trimmer head 20 has the automatic winding mode, the manual winding mode, and the trimming mode. When the user starts the motor 512 by operating the switch 34, the motor 512 can drive the spool 22 together with the head housing 21 to rotate about the central axis 201 of the head housing 21 along a first direction so that the string trimmer 200 is in the trimming mode. When the string trimmer head 20 is in the automatic winding mode, the motor 512 may drive the spool 22 and the head housing 21 to generate the second relative rotation, that is, the spool 22 rotates about the central axis 201 of the head housing 21 and relative to the head housing 21 along a second direction so that the string trimmer line 53 is automatically wound onto the spool 22. When the string trimmer head 20 is in the manual winding mode, the user may rotate the operating member 24 to drive the spool 22 and the head housing 21 to generate the second relative rotation, that is, the spool 22 rotates about the central axis 201 of the head housing 21 and relative to the head housing 21 along the second direction so that the string trimmer line 53 can also be wound onto the spool 22. The first direction is opposite to the second direction. In some examples, when the string trimmer head 20 is viewed from the motor 512, the second direction may be considered as a counterclockwise direction, and correspondingly, the first direction may be considered as a clockwise direction, which is of course not a limitation. It is to be understood that in other examples, a motor shaft 5121 may be connected to the head housing 21 to drive the head housing 21 to rotate. In this manner, when the string trimmer head 20 is in the automatic winding mode, the motor 512 drives the head housing 21 to rotate so that the spool 22 rotates relative to the head housing 21 along the second direction, so as to automatically wind the string trimmer line 53 onto the spool 22. Similarly, the operating member 24 may be connected to the head housing 21. When the string trimmer head 20 is in the manual winding mode, the user operates the operating member 24 to drive the head housing 21 to rotate so that the spool 22 rotates relative to the head housing 21 along the second direction, so as to wind the string trimmer line 53 onto the spool 22.

The string trimmer head 20 may not only transmit power to the spool 22 from the side of a power shaft 5131 to automatically wind the string trimmer line 53 but also transmit power to the spool 22 from the side of the operating member 24 to wind the string trimmer line 53 around the spool 22 so that the user may either trigger the operating device 30 to automatically wind the string trimmer line 53 or rotate the operating member 24 to manually wind the string trimmer line 53, thereby achieving the string trimmer 200 integrating manual winding and automatic winding. In one aspect, when the user rotates the operating member 24 to wind the string trimmer line 53, the user may feel fatigued. At this time, the user may operate the operating device 30 to automatically wind the string trimmer line 53 around the spool 22, thereby facilitating the operation of the user and improving working efficiency. Additionally, when the automatic winding mode of the string trimmer 200 fails, the user may rotate the operating member 24 to manually wind the string trimmer line 53 around the spool 22, thereby improving the reliability of the string trimmer 200.

The head housing 21 is further formed with external threading holes 21a for the string trimmer line 53 to extend to the outer side of the head housing 21. Two external threading holes 21a are provided. When the user needs to replenish the string trimmer line 53, the user does not need to open the head housing 21 and may thread the string trimmer line 53 through an external threading hole 21a into the accommodation space 210 so that the string trimmer line 53 directly extends into the head housing 21 and is wound around the spool 22 through the relative rotation between the spool 22 and the head housing 21. Such a string trimmer head 20 is generally referred to as an external plug-in winding string trimmer head.

A part of the string trimmer line 53 extending out of the head housing 21 through the external threading holes 21a is defined as an effective part of the string trimmer line 53, and the effective part of the string trimmer line 53 cuts weeds by rotating at a high speed. To trim weeds within a certain range, the length of the effective part of the string trimmer line 53 needs to reach a preset value, that is, the length of the effective part of the string trimmer line 53 is necessarily greater than or equal to the preset value. When the length of the effective part of the string trimmer line 53 is less than the preset value, the trimming efficiency of the string trimmer line 53 may decrease since the effective part of the string trimmer line 53 is relatively short. To keep the length of the effective part of the string trimmer line 53 always greater than or equal to the preset value, the string trimmer 200 in this example may implement the following: when the length of the effective part of the string trimmer line 53 is less than the preset value, the automatic line release device 23 controls the string trimmer line 53 to be automatically released to a length greater than or equal to the preset value. **It** is to be explained here that to prevent the string trimmer line 53 from extending too much and interfering with the shield 54, the effective part of the string trimmer line 53 is actually less than or equal to a limit value. Within this limit range, the string trimmer line 53 can effectively trim grass and maintain relatively high trimming efficiency in one aspect; in another aspect, the string trimmer line 53 is unlikely to interfere with the shield 54 and thus can perform continuous trimming.

The automatic line release device 23 is used for controlling a line release of the string trimmer head 20. The automatic line release device 23 has a first equilibrium state for preventing the line release of the string trimmer head 20, and the string trimmer head 20 is in a working state. The automatic line release device 23 also has a second equilibrium state for allowing the line release of the string trimmer head 20, and the string trimmer head 20 is in an autonomous line release state. In some examples, the automatic line release device 23 can autonomously identify an effective length of the string trimmer line 53 and automatically adjust the string trimmer head 20 according to the length of the effective part of the string trimmer line 53 to enter the first equilibrium state or the second equilibrium state, that is, adjust the string trimmer head 20 to automatically enter the working state or the autonomous line release state. The automatic line release device 23 may autonomously identify and adjust the working state of the string trimmer head 20 based on the automatic line release device 23 itself or by receiving an externally inputted indication signal of line release or trimming. The indication signal here includes a signal for mode switching of the automatic line release device 23 due to an external force, an electrical signal, a magnetic force, or another force generated by the outside on the string trimmer head 20. Among some common indication signals, the indication signal generally includes knocking a housing of the string trimmer head 20 to cause a speed difference between the spool 22 and the head housing 21 and thus implement the line release, regulating a speed through the switch to cause a speed difference between the spool 22 and the head housing 21 and thus implement the line release, or sensing a current change of the motor through a sensor to cause a speed difference between the spool 22 and the head housing 21 and thus implement the line release.

In some examples, the string trimmer head 20 has a constant rotational speed and does not require a rotational speed of the motor 512 to be adjusted for a change of a rotational speed of the spool 22 to obtain the speed difference between the head housing 21 and the spool 22 and perform the line release.

In some specific examples, when the automatic line release device 23 is in the first equilibrium state, the spool 22 and the head housing 21 are relatively stationary. In this manner, the spool 22 and the head housing 21 are driven by the power shaft 5131 to rotate synchronously so that the length of the effective part of the string trimmer line 53, which is wound around the spool 22, extending out of the head housing 21 does not change, that is, the string trimmer line 53 cannot be released and the string trimmer head 20 is in a normal working state. When the automatic line release device 23 is in the second equilibrium state, the spool 22 and the head housing 21 move relatively, and the string trimmer line 53 is thrown out relative to the spool 22 under the action of a centrifugal force of the string trimmer line 53 so that the string trimmer line 53 is released and the length of the effective part of the string trimmer line 53 increases.

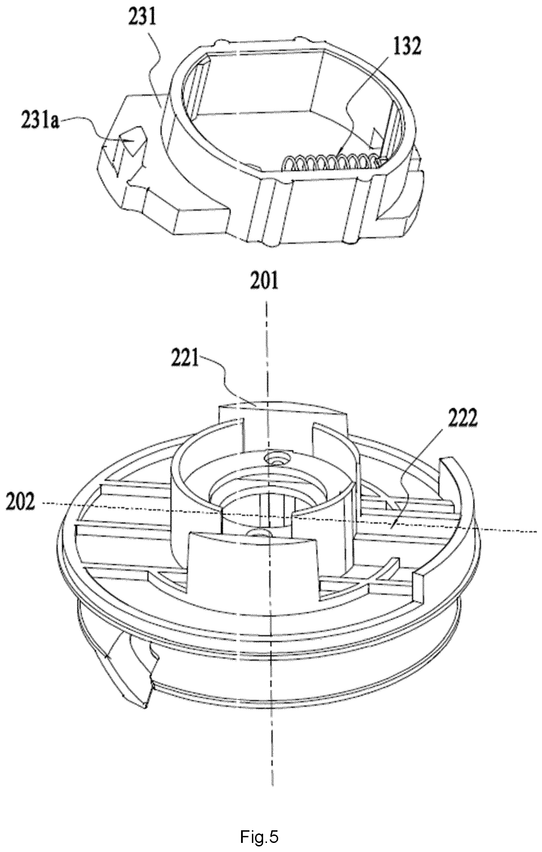

As shown in FIGS. 5 to 7, in some specific examples, the automatic line release device 23 includes a transmission member 231 capable of moving freely between the spool 22 and the head housing 21. When the automatic line release device 23 is in the first equilibrium state, the transmission member 231 rotates synchronously with the spool 22, the transmission member 231 is at a first position, the transmission member 231 mates with the head housing 21 to drive the head housing 21 to rotate synchronously with the spool 22, and the motor has a first rotational speed. When the automatic line release device 23 is in the second equilibrium state, the transmission member 231 rotates with the spool 22 and is disengaged from the head housing 21, the transmission member 231 is at a second position, the spool 22 and the head housing 21 can move relatively, and the motor 512 has a second rotational speed. As an implementation, when the transmission member 231 is at the first position or the second position, the ratio of an absolute value of a difference between the first rotational speed and the second rotational speed of the motor 512 to the first rotational speed is greater than or equal to 0 and less than or equal to 0.15. As an example, when the transmission member 231 is at the first position or the second position, the ratio of the absolute value of the difference between the first rotational speed and the second rotational speed of the motor 512 to the first rotational speed is greater than or equal to 0 and less than or equal to 0.1. In fact, in a relatively good state, when the transmission member 231 is at the first position or the second position, the ratio of the absolute value of the difference between the first rotational speed and the second rotational speed of the motor 512 to the first rotational speed is greater than or equal to 0 and less than or equal to 0.05, and the ratio of the absolute value of the difference between the first rotational speed and the second rotational speed of the motor 512 to the first rotational speed approaches 0 infinitely. With such a design, the string trimmer head 20 has no change in speed and can achieve an autonomous line release, that is, a fully automatic line release in a true sense. It is to be understood that when the transmission member 231 of the string trimmer head 20 is displaced or the string trimmer line 53 is released to a preset length due to wear or in an autonomous line release process, a certain force is generated so that the rotational speed of the string trimmer head 20 has a certain change due to the effects of factors such as a load of the string trimmer line 53 and a relative motion between internal parts of the string trimmer head 20 on the string trimmer head 20. Thus, the string trimmer head 20 cannot always maintain an absolutely constant speed in a theoretical sense and has a second speed different from a first speed. Here, within the preceding allowable error range, it is considered that the string trimmer head 20 still rotates at the constant speed as described above when changing from the first speed to the second speed, and the string trimmer head 20 switches between the autonomous line release state and the working state without depending on the preceding change in speed.

Specifically, in a direction of a straight line 202 substantially perpendicular to the central axis 201 of the head housing 21 or obliquely intersecting the central axis 201 of the head housing 21, the transmission member 231 is disposed between the spool 22 and the head housing 21 along the direction of the straight line 202. The transmission member 231 is provided with a transmission hole through which the transmission member 231 is sleeved on the spool 22 and can rotate synchronously with the spool 22. Thus, when the motor 512 drives the spool 22 to rotate, the transmission member 231 can rotate synchronously with the spool 22.

The spool 22 is further formed with or connected to a limiting portion 221 capable of limiting a displacement of the transmission member 231 in a circumferential direction around the central axis 201 of the head housing 21. Specifically, the limiting portion 221 is a pair of protrusions disposed symmetrically about a plane of symmetry passing through the straight line 202, and the transmission member 231 can be limited within the range of the limiting portion 221 when sleeved on the spool 22 along the direction of the central axis 201 of the head housing 21 and can only displace radially along the direction of the straight line 202 perpendicular to the central axis 201 of the head housing 21. The transmission member 231 is asymmetric in mass distribution relative to a plane of symmetry passing through the central axis 201 of the head housing 21. Further, the centroid of the transmission member 231 deviates from the central axis 201 of the head housing 21 so that when the string trimmer head 20 is driven by the motor 512 to rotate, the transmission member 231 is subjected to a centrifugal force to have a tendency to move from the first position to the second position. When rotating about the axis of rotation 201, the head housing 21 applies resistance to the transmission member 231, which resists the centrifugal force to prevent the transmission member from moving from the first position to the second position. A biasing element 232 is further provided between the transmission member 231 and the spool 22, where the biasing element 232 may specifically be a coil spring.

More specifically, an accommodation groove 222 extends on the spool 22, the coil spring is at least partially disposed in the accommodation groove 222, an end of the coil spring abuts against the bottom of the accommodation groove 222, and the other end of the coil spring abuts against the transmission member 231. The center of gravity of the transmission member 231 and the coil spring are disposed on two sides of the central axis 201 of the head housing 21. Additionally, the limiting portion 221 mates with the accommodation groove 222 to form a slide rail for the transmission member 231 to slide, that is, the transmission member 231 is slidably connected to the spool 22. When the transmission member 231 rotates with the spool 22, the transmission member 231 generates the centrifugal force while the transmission member 231 is subjected to a biasing force of the biasing element 232, where the biasing force and the centrifugal force have opposite directions. The directions of the centrifugal force and the biasing force may further be the direction of the straight line 202, and the transmission member 231 may be slidably connected to the spool 22 along the direction of the straight line 202. The center of gravity of the transmission member 231 and the biasing element 232 are disposed on two sides of a plane passing through the central axis 201 of the head housing 21 and perpendicular to the straight line 202, separately. It is to be understood that when moving relative to the spool 22 along the direction of the straight line 202, the transmission member 231 is also subjected to a frictional force between the transmission member 231 and the spool 22, where the frictional force can effectively prevent the biasing element 232 from overcoming the centrifugal force and prevent the automatic line release device 23 from being too flexible and releasing the string trimmer line by mistake.

In some examples, the head housing 21 forms the preceding accommodation space 210 around the central axis 201 of the head housing 21, the spool 22 is at least partially disposed in the accommodation space 210 formed by the head housing 21, and the transmission member 231 is at least partially disposed in the accommodation space 210. Specifically, the head housing 21 includes the upper housing 21b, the upper housing 21b does not close the accommodation space 210, and the power shaft 5131 penetrates through the upper housing 21b and extends into the accommodation space 210. A mating portion 211 that can be driven by the transmission member 231 is formed on the lower side of the upper housing 21b, and the transmission member 231 is formed with a drive portion 231a mating with the mating portion 211. When the drive portion 231a mates with the mating portion 211, a force can be transmitted between the transmission member 231 and the head housing 21. Specifically, the mating portion 211 includes a mating surface 211a and a reset surface 211b. The mating surface 211a is used for being in contact with the drive portion 231a to apply a reaction force to the drive portion 231a; and the reset surface 211b is used for being in contact with the drive portion 231a to apply a force to the drive portion 231a. When the drive portion 231a mates with the mating surface 211a, the string trimmer head 20 is in the working state; and when the drive portion 231a mates with the reset surface 211b, the string trimmer head 20 is in the autonomous line release state.

Specifically, the mating surface 211a extends along a first straight line 203, where the first straight line 203 does not pass through the central axis 201. In this manner, a force F perpendicular to the first straight line 203 is generated between the mating portion 211 and the drive portion 231a, and the magnitude of the force F is affected by the change of the effective length of the string trimmer line 53. When the effective length of the string trimmer line 53 is greater than the preset value, the string trimmer line 53 is subjected to a relatively large centrifugal force, and the relatively large force is transmitted to the drive portion 231a through the head housing 21 so that the drive portion 231a is subjected to a relatively large force F. When the effective length of the string trimmer line 53 is less than the preset value, the string trimmer line 53 is subjected to a relatively small centrifugal force, and the relatively small centrifugal force makes the drive portion 231a subjected to a smaller force F. The transmission member 231 is subjected to a centrifugal force of the transmission member itself, the frictional force, the biasing force, and the force F. When the effective length of the string trimmer line 53 is greater than the preset value, the centrifugal force of the transmission member 231, the frictional force, the biasing force, and the force F are in a balanced state, that is, a resultant force of the four forces is basically 0 so that the transmission member 231 remains at the first position, and the string trimmer 200 is in the trimming state. When the effective length of the string trimmer line 53 is less than the preset value, the centrifugal force of the transmission member 231, the frictional force, the biasing force, and the force F are out of the balanced state, that is, the transmission member 231 moves away from the first position under the action of the force, and the string trimmer 200 switches from the trimming state to the autonomous line release state to implement an automatic line release. For a detailed description of the implementation principle of the automatic line release device 23, reference may be made to US Patent Application No. US17/551,225 filed Dec. 15, 2021.

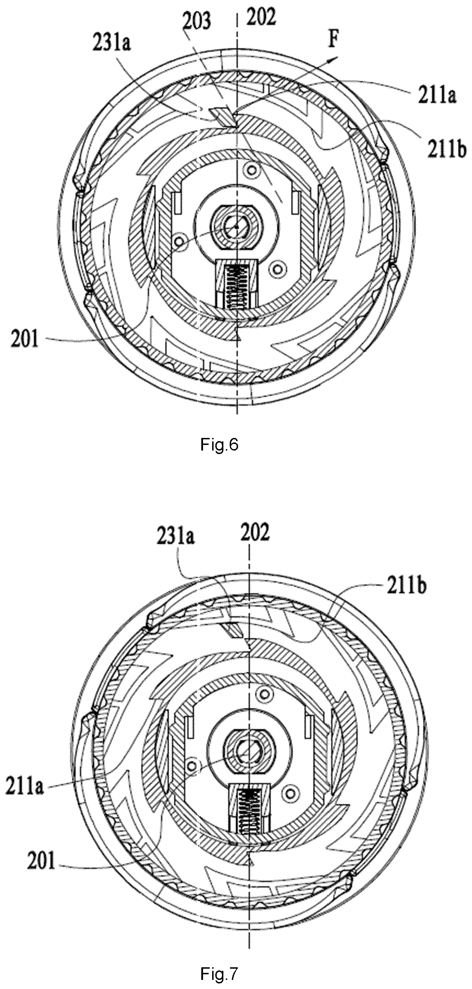

As shown in FIGS. 6 and 7, the upper housing 21b is formed with an inner ring and an outer ring, both of which are formed around the central axis 201 of the head housing 21, the inner ring is formed with first teeth which are specifically external teeth formed on the inner ring and protruding towards the outer ring, and the outer ring is formed with second teeth which are specifically internal teeth formed on the outer ring and protruding towards the inner ring. A first tooth constitutes or forms the preceding mating surface 211a, and a second tooth constitutes or forms the precede reset surface 211b. Multiple first teeth are provided, and multiple second teeth are also provided. In the circumferential direction around the central axis 201 of the head housing 21, the first tooth and the second tooth are staggered from each other, that is to say, the first tooth and the second tooth are not simultaneously arranged in a direction of a diameter perpendicular to the central axis 201 of the head housing 21. Specifically, the drive portion 231a on the transmission member 231 may be configured to be an engagement tooth mating with the first tooth and the second tooth. In some examples, the drive portion 231a and the biasing element 232 are disposed on two sides of the transmission member 231 separately, that is to say, the drive portion 231a and the centroid of the transmission member 231 are disposed on the same side of the central axis 201 of the head housing 21.

As shown in FIG. 6, when the drive portion 231a of the transmission member 231 meshes with the first tooth or the second tooth and the power shaft 5131 rotates along the first direction, the transmission member 231 makes the head housing 21 stationary relative to the spool 22, that is to say, no relative motion is generated between the spool 22 and the head housing 21. It may be considered that the automatic line release device 23 is in the first equilibrium state, and the string trimmer 200 is in the working state of normal trimming. As shown in FIG. 7, when the drive portion 231a of the transmission member 231 is disengaged from the first tooth and the second tooth, the whole constituted by the transmission member 231 and the spool 22 can move relative to the head housing 21. In some examples, the direction in which the spool 22 moves relative to the head housing 21 is consistent with a trimming direction of the string trimmer 200. In this case, the spool 22 can move relative to the head housing 21. It may be considered that the automatic line release device 23 is in the second equilibrium state, that is, the string trimmer head 20 is in the autonomous line release state.

In some examples, a damping device is further provided, where the damping device enables the spool 22 and the head housing 21 to generate a relative rotation. Specifically, the damping device may be configured to be a limiting pin (not shown) for limiting a rotation of the head housing 21 or the spool 22 and can be inserted into a limiting hole reserved on the head housing 21 or the spool 22 to limit the rotation of the head housing 21 or the spool 22. As another implementation, the damping device may be configured to be a friction member (not shown) which can be in contact with the spool 22 or the head housing 21 so that the head housing 21 and the spool 22 move relatively due to a speed difference. As another implementation, the damping device may be configured to include a one-way bearing and a rotary support; where the one-way bearing enables two parts or portions connected to the one-way bearing to rotate relatively in only one direction of rotation and not to rotate relatively in the other direction of rotation. The rotary support is rotatably connected to a portion of the string trimmer head 20 and supports a rotation of the portion. The rotary support may be the first housing 511 that accommodates the motor 512 in the string trimmer 200 or another component fixedly connected to the first housing 511, such as the shield 54. More specifically, the one-way bearing is disposed between the rotary support and the head housing 21 so that they are rotatably connected in one direction, that is, when the rotary support is used for reference, the head housing 21 can rotate in one direction of rotation and cannot rotate in the other direction of rotation. The power shaft 5131 is non-rotatably connected to the spool 22 so that the spool 22 can rotate relative to the rotary support in two directions, that is, when the rotary support is used for reference, the spool 22 can rotate forwardly and reversely.

Based on the preceding hardware, when the motor 512 rotates forwardly, the power shaft 5131 drives the spool 22 to rotate forwardly. At this time, the transmission member on the spool 22 implements torque transmission by meshing with the first tooth, and the one-way bearing enables the head housing 21 to rotate forwardly relative to the rotary support (that is, relative to the whole string trimmer 200). At this time, the spool 22 and the head housing 21 rotate synchronously, and the string trimmer 200 may perform a cutting mode. When the motor 512 rotates reversely, the power shaft 5131 drives the spool 22 to rotate reversely, the head housing 21 is prevented from rotating reversely by the one-way bearing so that the spool 22 and the head housing 21 move relatively, and the drive portion 231a on the transmission member is disengaged from the first tooth due to the reverse rotation of the motor 512 so that the string trimmer 200 may perform an autonomous winding mode.

In a rotation process of the string trimmer head 20, the torque outputted by the string trimmer head 20 changes with the length of the string trimmer line 53. It is to be understood that the longer the string trimmer line 53, the greater the torque outputted by the string trimmer head 20 and the greater the interaction force between the transmission member 231 and the head housing 21; conversely, the shorter the string trimmer line 53, the smaller the torque outputted by the string trimmer head 20 and the smaller the interaction force between the transmission member 231 and the head housing 21.

Therefore, when the string trimmer line 53 is longer than a preset length, the torque of the string trimmer head 20 is relatively large, the transmission member 231 cannot be disengaged from the first tooth under the action of the centrifugal force, and the whole string trimmer head 20 is in the first equilibrium state. When the string trimmer line 53 is shorter than the preset length, the torque of the string trimmer head 20 is relatively small, the transmission member 231 is disengaged from the first tooth under the action of the centrifugal force, and the whole string trimmer head 20 is in the second equilibrium state. At this time, the spool 22 can rotate relative to the head housing 21, and the string trimmer head 20 starts the line release.

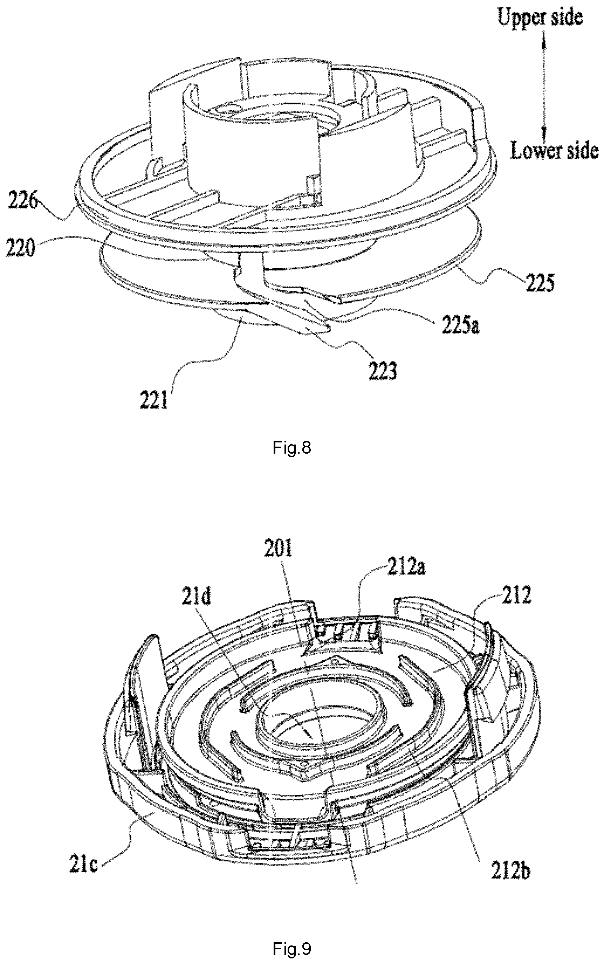

To be convenient for the user to quickly thread the string trimmer line 53 into the string trimmer head 20 and wind the string trimmer line 53 onto the spool 22 without disassembling the string trimmer head 20, as shown in FIGS. 8 to 11, a guide assembly is provided in the present invention to guide the string trimmer line 53 to be wound onto the spool 22. The guide assembly includes a first guide structure 212 and a second guide structure 223. The first guide structure 212 facilitates the rapid threading of the string trimmer line 53 through the string trimmer head 20 by the user, and the second guide structure 223 guides the string trimmer line 53 to be wound onto the spool 22.

In some examples, the first guide structure 212 is disposed on an inner side of the lower housing 21c, and the second guide structure 223 is disposed on the spool 22. In an example, the first guide structure 212 and the second guide structure 223 are disposed on the lower side of the spool 22, and the automatic line release device 23 is disposed on the upper side of the spool. When the spool 22 is mounted inside the string trimmer head 20, the user may directly thread the string trimmer line 53 into the head housing 21 through one external threading hole 21a of the head housing 21 and out through the other external threading hole 21a. At this time, the string trimmer line 53 penetrates through the string trimmer head 20. Then, the spool 22 is rotated, the second guide structure 223 on the spool 22 guides the string trimmer line 53 into the winding groove 220 of the spool 22, the spool 22 continues to be rotated, and finally the string trimmer line 53 is all wound onto the spool 22, thereby achieving the storage of the string trimmer line 53.

As shown in FIG. 8, the spool 22 includes a body portion 224 and a stopper portion formed around the body portion 224. The stopper portion includes a first stopper portion 225 and a second stopper portion 226. The winding groove 220 is formed between the first stopper portion 225 and the second stopper portion 226. The stopper portion is configured to prevent the string trimmer line 53 from being out of the winding groove 220 along the direction of the central axis 201 of the head housing 21. In a plane perpendicular to the direction of the central axis 201 of the head housing 21, projections of the first stopper portion 225 and the second stopper portion 226 substantially coincide with each other and form a circular ring around the body portion 224.

The first stopper portion 225 is formed with the second guide structure 223 for guiding the string trimmer line 53 to be wound into the winding groove 220. In an example, the first stopper portion 225 is formed with two openings 225a symmetrical about the central axis 201 of the head housing 21, where each opening 225a is basically polygonal and communicates with the winding groove 220, and a fulcrum portion for guiding the string trimmer line 53 to be wound into the winding groove 220 is formed at the connection between the winding groove 220 and the opening 225a. The fulcrum portion is configured to apply a reverse force to the string trimmer line 53 to avoid a winding failure due to that the direction of a force is basically the same as the direction of the string trimmer line 53 when the user performs winding. The second guide structure 223 is disposed on the first stopper portion 225 and at the opening 225a. A structure formed at the opening 225 and protruding from a plane of the first stopper portion 225 and away from the first stopper portion 225 is the second guide structure 223. The second guide structure 223 is a protrusion upturned from the stopper portion and has a guide surface. The guide surface is smooth, continuous, and integrally formed with the first stopper portion 225. Alternatively, on the premise that the strength of the spool 22 is insufficient, the second guide structure 223 may be an independent element that satisfies a strength requirement and is fixedly connected to the first stopper portion 225. Additionally, to prevent the string trimmer line 53 from slipping out from an upper end of the second guide structure 223, a gap between the second guide structure 223 and the head housing 21 is configured to be less than the diameter of the string trimmer line 53. In this manner, the string trimmer line 53 can slide into the accommodation groove 220 only through the opening 225a. In an example, two second guide structures 223 are provided, and the two second guide structures 223 are disposed at the two openings 225a of the first stopper portion 225, separately.

As shown in FIGS. 9 to 11, the first guide structure 212 is formed or connected on the inner side of the lower housing 21c. In some examples, the first guide structure 212 and the body of the head housing 21 are formed separately and fixedly connected by screws. In other examples, besides the above connection manner, the first guide structure 212 and the head housing 21 may be connected in another fixed or detachable connection manner such as a snap connection or bonding as long as the first guide structure 212 is connected to the head housing 21 without generating a relative displacement. Alternatively, the first guide structure 212 is integrally formed with the body of the head housing 21. The first guide structure 212 is formed with notches 212a, where the notches 212a correspond to and communicate with the external threading holes 21a one to one for the string trimmer line 53 to penetrate in or out. The whole structure formed by the head housing 21 and the first guide structure 212 is formed with a through hole 21d around the central axis 201 of the head housing 21, where the through hole 21d is used for the operating member 24 to pass through. The first guide structure 212 is formed with a channel around the through hole 21d, where the channel guides the string trimmer line 53 to penetrate through the head housing 21.

In an example, protrusion portions 212b are distributed on the first guide structure 212 and around the through hole 21d, where the protrusion portions 212b divide the accommodation space 210 of the head housing 21 into two areas, which are a threading guide area 210a for the string trimmer line 53 to pass through and a rotation area 210b for the second guide structure 223 to rotate in.

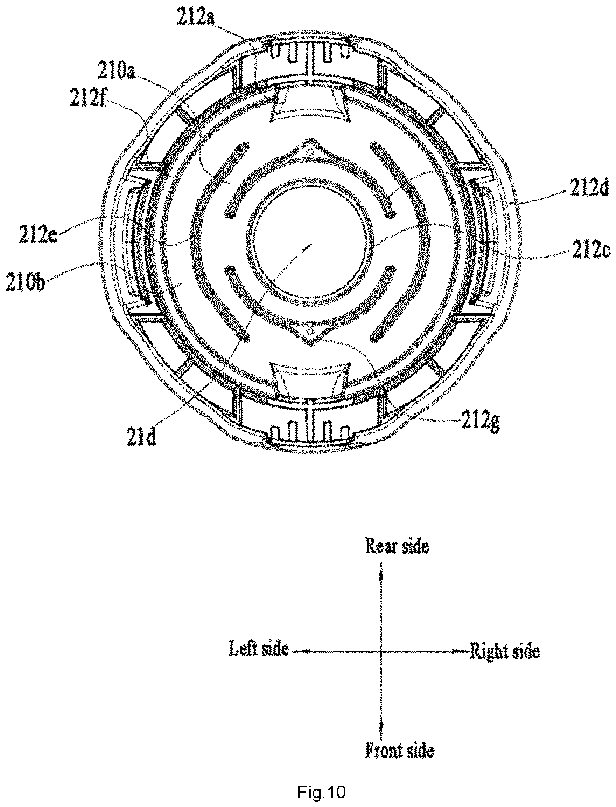

In an example, as shown in FIG. 10, the protrusion portions 212b may include a first protrusion portion 212c, a second protrusion portion 212d, a third protrusion portion 212e, and a fourth protrusion portion 212f, where circles at the positions of the first protrusion portion 212c to the fourth protrusion portion 212f gradually increase in radius, and the first protrusion portion 212c to the fourth protrusion portion 212f are all ridges. The first protrusion portion 212c and the second protrusion portion 212d may constitute a temporary storage area of the string trimmer line 53, the second protrusion portion 212d and the third protrusion portion 212e constitute the threading guide area 210a, and the third protrusion portion 212e and the fourth protrusion portion 212f constitute the rotation area 210b.

The first protrusion portion 212c is a continuous and smooth circle formed around the through hole 21d; the second protrusion portion 212d is a continuous and irregular circular arc or line segment formed around the through hole 21d, the second protrusion portion 212d includes one or more circular arcs or line segments, guide portions 212g for guiding the string trimmer line 53 to be inserted are formed at the notches 212a, a projection of each guide portion 212g on the plane perpendicular to the central axis 201 of the head housing 21 is basically triangular, and the guide portion 212g protrudes from a circle where the second protrusion portion 212d is located. The guide portion 212g may be integrally formed with the second protrusion portion 212d. The guide portion 212g is continuous and smooth to facilitate the insertion of the string trimmer line 53. In some examples, two guide portions 212g are disposed symmetrically about a left and right direction. The two guide portions 212g divide the threading guide area 210a into two sections, and the string trimmer line 53 can pass through both sections. Alternatively, in other examples, one guide section may be closed and only one guide section is opened for the string trimmer line 53 to pass through. The third protrusion portion 212e is a continuous and irregular circular arc formed around the through hole 21d and is broken at the notches 212a, thereby forming two circular arcs symmetrical about a front and rear direction. The fourth protrusion portion 212f is a continuous circular arc formed around the through hole 21d and is broken at the notches 212a to form openings for the string trimmer line 53 to penetrate in or out.

Generally, the user may thread the string trimmer line 53 into the head housing 21 through one external threading hole 21a on the head housing 21 and out through the other external threading hole 21a. However, in the example shown in FIG. 10, multiple protrusion portions may hinder the insertion of the string trimmer line 53 by the user, and the string trimmer line 53 inserted by the user, when colliding with the multiple protrusion portions, may change the direction of the string trimmer line 53 and even return to the original external threading hole 21a through which the string trimmer line 53 is inserted.

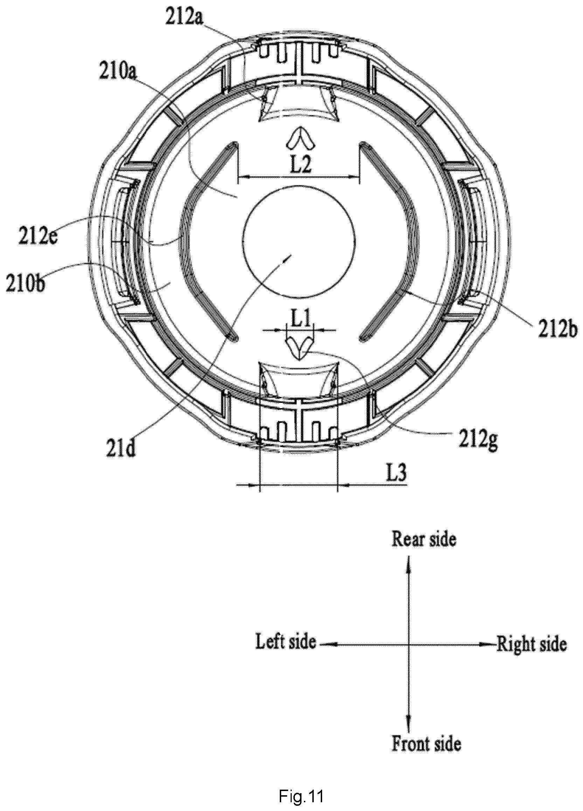

In some examples, as shown in FIG. 11, the protrusion portions 212b may consist of the third protrusion portion 212e and the guide portions 212g to reduce the probability that the string trimmer line 53 inserted by the user changes an extension direction when colliding with the multiple protrusion portions.

Referring to FIG. 11, a minimum distance between the protrusion portion 212b and the through hole 21d of the head housing 21 is greater than or equal to a minimum distance between the guide portion 212g and the through hole 21d. The threading guide area 210a that allows the string trimmer line 53 to pass through may be formed between the protrusion portion 212b and the guide portions 212g. Optionally, a maximum length L1 of the guide portion 212g is smaller than a minimum distance L2 between two circular arcs of the protrusion portion 212b. It is convenient for the string trimmer line 53 to enter the threading guide area 210a between the two circular arcs of the guide portion 212g. Optionally, the minimum distance L2 between the two circular arcs of the protrusion portion 212b is greater than or equal to a maximum length L3 of the notch 212a. It is convenient for the string trimmer line 53 to enter the threading guide area 210a between the two circular arcs of the guide portion 212g after passing through the notch 212a. Optionally, the maximum length L1 of the guide portion 212g is smaller than the maximum length L3 of the notch 212a. If the guide portion 212g is longer than the notch 212a, the string trimmer line 53 is hindered from entering the threading guide area 210a between the two circular arcs of the guide portion 212g after passing through the notch 212a.

In some examples, the operating member 24 and the spool 22 rotate synchronously, and the position of the spool 22 is fixed relative to the head housing 21 in the direction of the central axis 201 of the head housing 21. The operating member 24 is at least partially disposed on the outer side of the head housing 21, and the head housing 21 is further formed with the through hole 21d through which the operating member 24 partially extends into the accommodation space from the outside of the accommodation space 210 along the direction of the central axis 201 of the head housing 21. The operating member 24 can close at least part of the through hole 21d.

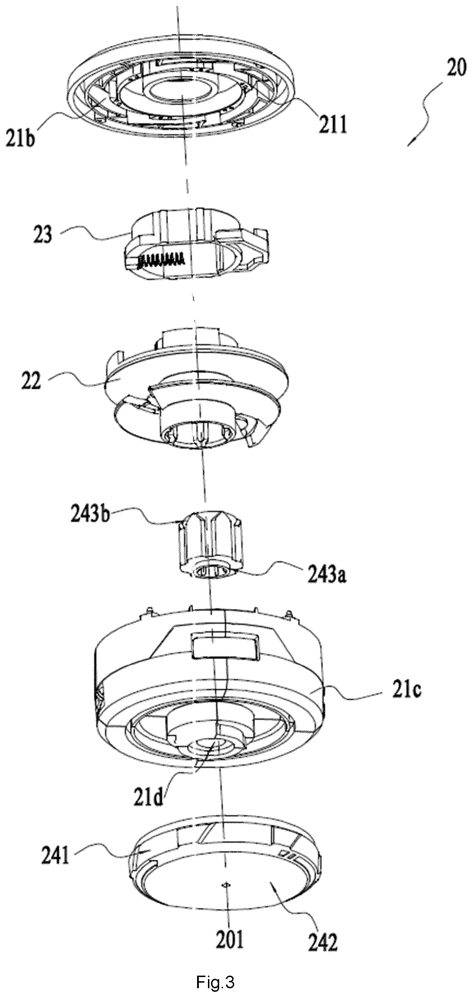

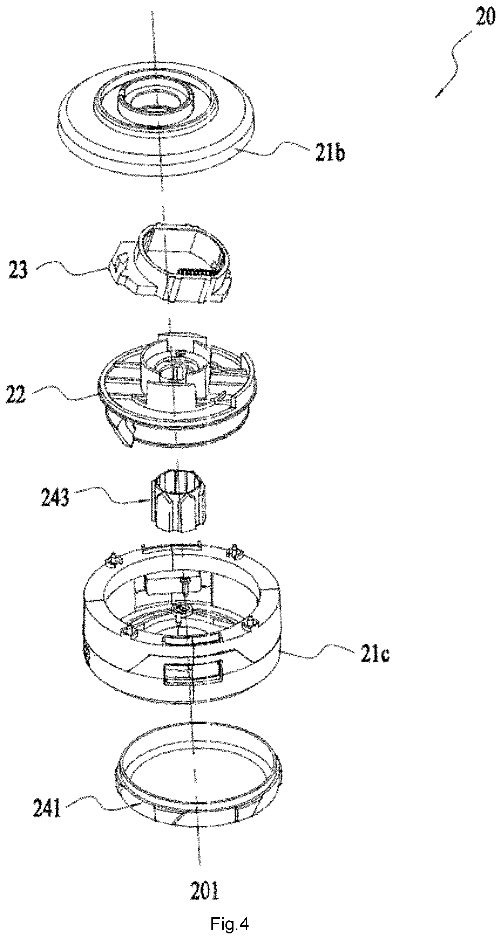

As shown in FIGS. 3 and 4, in some examples, the operating member 24 includes an operating portion 241 for the user to hold and operate. The operating portion 241 is configured to be formed on a portion of the operating member 24 outside the head housing 21 to be convenient for the user to hold and operate. When the user rotates the operating portion 241, the operating member 24 can drive the spool 22 to rotate synchronously with the operating member 24. The operating portion 241 rotates around the head housing 21 and about the central axis 201 of the head housing 21.

The operating portion 241 may surround at least part of the head housing 21 in the circumferential direction around the central axis 201 of the head housing 21 so that the head housing 21 is at least partially disposed in a space surrounded by the operating portion 241. In this manner, the operating portion 241 has a relatively large diameter to be convenient for the user to rotate the operating member 24 more comfortably.

The operating member 24 may include a contact portion 242 for being in contact with the ground when the string trimmer head 20 is trimming grass. The contact portion 242 may be fixedly connected to the operating portion 241. In some examples, the operating portion 241 may be integrally formed with the contact portion 242.

The operating member 24 may further include a connecting portion 243 for connecting the operating member 24 to the spool 22. A first end 243a of the connecting portion 243 is fixedly connected to the contact portion 242, and a second end 243b of the connecting portion 243 is fixedly connected to the spool. In some examples, the connecting portion 243 is fixedly connected to the contact portion 242 by a screw. In some examples, the connecting portion 243 may include a first connecting portion and a second connecting portion. The first connecting portion at least partially penetrates through the through hole 21d of the head housing 21 and is fixedly connected to the contact portion 242. In some examples, the first connecting portion may be integrally formed with the contact portion 242. The second connecting portion is accommodated in the accommodation space 210 of the head housing 21. The first end 243a of the connecting portion 243 is fixedly connected to the contact portion 242, and the second end 243b of the connecting portion 243 is fixedly connected to the spool. Optionally, the fixed connection may be a detachable connection or a non-detachable connection. In some examples, the first connecting portion is fixedly connected to the second connecting portion by a screw. In some examples, the second connecting portion and the spool 22 may be movably connected through bonding, gear engagement, or an interference fit, so as to facilitate the installation and detachment of the string trimmer head 20 by the user. In some examples, the number of parts of the connecting portion for torque transmission between the spool 22 and the operating member 24 is not limited, and one part or multiple parts may be provided. The first connecting portion and the second connecting portion may be understood as two different functional areas of the same part or may be understood as two different functional areas of different parts.

In the preceding example, the user may operate the operating member 24 to drive the spool 22 to rotate relative to the head housing 21: the user holds and rotates the operating portion 241, the operating portion 241 drives the contact portion 242 to rotate, the contact portion 242 drives the connecting portion 243 integrally formed with or fixedly connected to the contact portion 242 to rotate, and the connecting portion 243 drives the spool 22 to rotate so that the spool 22 and the head housing 21 rotate relatively.

In some examples, the operating member 24 may be fixed relative to the spool 22 in the direction of the central axis 201 of the head housing 21, thereby increasing the structural stability of the string trimmer head 20 during trimming and avoiding a structural fault due to the sliding of the operating member 24 relative to the spool 22 in the direction of the central axis 201. Optionally, the operating member 24 is fixed relative to the head housing 21 in the direction of the central axis 201, thereby preventing the operating member 24 from slipping relative to the head housing 21 in the direction of the central axis 201 after touching the ground. Optionally, the spool 22 is fixed relative to the head housing 21 in the direction of the central axis 201, thereby avoiding a structural fault due to the sliding of the head housing 21 relative to the spool 22 in the direction of the central axis 201.

## Claims

1. A string trimmer head (20), comprising:
a spool (22) around which a string trimmer line (53) is capable of being wound;
a head housing (21) having an accommodation space (210) capable of accommodating at least part of the spool;
an automatic line release device (23) configured to enable the spool and the head housing to generate a first relative rotation so that the string trimmer head releases the string trimmer line, wherein the string trimmer line has an effective length extending out of the accommodation space; and the automatic line release device is further configured to make the string trimmer head release the string trimmer line when the effective length of the string trimmer line is less than a preset value; and
an operating member (24) configured to be operable by a user to drive the spool and the head housing to generate a second relative rotation so that the string trimmer line is wound around the spool;
the string trimmer head (20) being **characterized in that** the head housing is provided with a through hole (21d) along a central axis (201), part of the operating member penetrates through the through hole and enters the accommodation space of the head housing, and the operating member rotates synchronously with the spool.

2. The string trimmer head according to claim 1, wherein the operating member is fixedly connected to the spool.

3. The string trimmer head according to claim 2, wherein the operating member is fixed relative to the spool in a direction of the central axis.

4. The string trimmer head according to claim 1, wherein the operating member is fixed relative to the head housing in a direction of the central axis.

5. The string trimmer head according to claim 1, wherein the spool is fixed relative to the head housing in a direction of the central axis.

6. The string trimmer head according to claim 1, wherein when the string trimmer head is in a state of the first relative rotation, the spool rotates about the central axis of the head housing and relative to the head housing along a first direction, or the head housing rotates about the central axis and relative to the spool along the first direction; and when the string trimmer head is in a state of the second relative rotation, the spool rotates about the central axis and relative to the head housing along a second direction, or the head housing rotates about the central axis and relative to the spool along the second direction; wherein the first direction is opposite to the second direction.

7. The string trimmer head according to claim 1, wherein the operating member comprises:
an operating portion (241) for the user to hold;
a contact portion (242) for being in contact with the ground when the string trimmer head is trimming grass and fixedly connected to the operating portion; and
a connecting portion (243) at least partially penetrating through the through hole and accommodated in the accommodation space of the head housing, wherein a first end (243a) of the connecting portion is fixedly connected to the contact portion, and a second end (243b) of the connecting portion is fixedly connected to the spool.

8. The string trimmer head according to any one of claim 1, wherein the head housing comprises a first guide structure (212) configured to guide the string trimmer line to penetrate through the head housing without entering the spool during threading, and the spool comprises a second guide structure (223) configured to guide the string trimmer line to leave the first guide structure and be wound around the spool through the second relative rotation between the spool and the head housing during winding.

9. The string trimmer head according to claim 8, wherein the first guide structure comprises:
notches (212a) for the string trimmer line to penetrate into or out of the head housing;
a protrusion portion (212b) used for forming a threading channel for guiding the string trimmer line to penetrate through the head housing, configured to be at least two circular arcs formed around a through hole of the head housing, and broken at the notches; and
guide portions (212g) used for guiding the string trimmer line to penetrate into the head housing and formed at the notches.

10. The string trimmer head according to claim 1, wherein the automatic line release device is configured to switch between an autonomous line release state for allowing a line release of the string trimmer head and a trimming state for preventing the line release of the string trimmer head based on a change of the effective length of the string trimmer line.

11. The string trimmer head according to claim 1, wherein the operating member is configured to be operated by the user to drive the head housing to rotate.

12. The string trimmer head according to claim 1, wherein the operating member is configured to be operated by the user to drive the spool to rotate.

13. The string trimmer head according to claim 1, wherein the automatic line release device comprises a transmission member (231) capable of switching between a first position and a second position, wherein when the transmission member is at the first position, the automatic line release device prevents a relative rotation between the spool and the head housing, and when the transmission member is at the second position, the automatic line release device allows the relative rotation between the spool and the head housing.

14. The string trimmer head according to claim 13, wherein the transmission member rotates synchronously with the spool and comprises a drive portion (231a) for driving the head housing to rotate, the head housing comprises a mating portion (211) mating with the drive portion, the head housing comprises an upper housing (21b) and a lower housing (21c), and the mating portion is disposed on a lower side of the upper housing.

## Patentansprüche

1. Ein Fadenmähkopf (20), umfassend:
eine Spule (22), um die ein Mähfaden (53) gewickelt werden kann;
ein Kopfgehäuse (21) mit einem Aufnahmeraum (210), der dazu ausgebildet ist, mindestens einen Teil der Spule aufzunehmen;
eine automatische Fadenfreigabeeinrichtung (23), die dazu ausgebildet ist, der Spule und dem Kopfgehäuse eine erste Relativdrehung zu ermöglichen, so dass der Fadenmähkopf den Mähfaden freigibt, wobei der Mähfaden eine wirksame Länge aufweist, die sich aus dem Aufnahmeraum heraus erstreckt; und wobei die automatische Fadenfreigabeeinrichtung ferner dazu ausgebildet ist, den Fadenmähkopf den Mähfaden freigeben zu lassen, wenn die wirksame Länge des Mähfadens kleiner als ein voreingestellter Wert ist; und
ein Betätigungselement (24), das dazu ausgebildet ist, von einem Benutzer betätigt zu werden, um die Spule und das Kopfgehäuse anzutreiben, eine zweite Relativdrehung zu erzeugen, so dass der Mähfaden um die Spule gewickelt wird;
wobei der Fadenmähkopf (20) **dadurch gekennzeichnet ist, dass**
das Kopfgehäuse entlang einer Zentralachse (201) mit einem Durchgangsloch (21d) versehen ist, ein Teil des Betätigungselements durch das Durchgangsloch hindurchtritt und in den Aufnahmeraum des Kopfgehäuses eintritt, und das Betätigungselement synchron mit der Spule rotiert.

2. Der Fadenmähkopf nach Anspruch 1, wobei das Betätigungselement fest mit der Spule verbunden ist.

3. Der Fadenmähkopf nach Anspruch 2, wobei das Betätigungselement in einer Richtung der Zentralachse relativ zu der Spule fest ist.

4. Der Fadenmähkopf nach Anspruch 1, wobei das Betätigungselement in einer Richtung der Zentralachse relativ zu dem Kopfgehäuse fest ist.

5. Der Fadenmähkopf nach Anspruch 1, wobei die Spule in einer Richtung der Zentralachse relativ zu dem Kopfgehäuse fest ist.

6. Der Fadenmähkopf nach Anspruch 1, wobei, wenn sich der Fadenmähkopf in einem Zustand der ersten Relativdrehung befindet, die Spule um die Zentralachse des Kopfgehäuses und relativ zu dem Kopfgehäuse entlang einer ersten Richtung rotiert oder das Kopfgehäuse um die Zentralachse und relativ zu der Spule entlang der ersten Richtung rotiert; und wenn sich der Fadenmähkopf in einem Zustand der zweiten Relativdrehung befindet, die Spule um die Zentralachse und relativ zu dem Kopfgehäuse entlang einer zweiten Richtung rotiert oder das Kopfgehäuse um die Zentralachse und relativ zu der Spule entlang der zweiten Richtung rotiert; wobei die erste Richtung der zweiten Richtung entgegengesetzt ist.

7. Der Fadenmähkopf nach Anspruch 1, wobei das Betätigungselement umfasst:
einen Betätigungsabschnitt (241) zum Halten durch den Benutzer;
einen Kontaktabschnitt (242) zum Inkontaktstehen mit dem Boden, wenn der Fadenmähkopf Gras schneidet, und der fest mit dem Betätigungsabschnitt verbunden ist; und
einen Verbindungsabschnitt (243), der mindestens teilweise durch das Durchgangsloch hindurchtritt und in dem Aufnahmeraum des Kopfgehäuses aufgenommen ist, wobei ein erstes Ende (243a) des Verbindungsabschnitts fest mit dem Kontaktabschnitt verbunden ist und ein zweites Ende (243b) des Verbindungsabschnitts fest mit der Spule verbunden ist.

8. Der Fadenmähkopf nach Anspruch 1, wobei das Kopfgehäuse eine erste Führungsstruktur (212) umfasst, die dazu ausgebildet ist, den Mähfaden so zu führen, dass er beim Einfädeln durch das Kopfgehäuse hindurchtritt, ohne in die Spule einzutreten, und die Spule eine zweite Führungsstruktur (223) umfasst, die dazu ausgebildet ist, den Mähfaden zu führen, damit er die erste Führungsstruktur verlässt und durch die zweite Relativdrehung zwischen der Spule und dem Kopfgehäuse beim Aufwickeln um die Spule gewickelt wird.

9. Der Fadenmähkopf nach Anspruch 8, wobei die erste Führungsstruktur umfasst:
Aussparungen (212a), durch die der Mähfaden in das Kopfgehäuse hinein oder aus dem Kopfgehäuse heraus treten kann;
einen Vorsprungsabschnitt (212b), der zum Bilden eines Einfädelkanals zum Führen des Mähfadens durch das Kopfgehäuse hindurch verwendet wird, dazu ausgebildet ist, mindestens zwei kreisförmige Bögen zu sein, die um ein Durchgangsloch des Kopfgehäuses herum ausgebildet sind, und an den Aussparungen unterbrochen ist; und
Führungsabschnitte (212g), die zum Führen des Mähfadens in das Kopfgehäuse hinein verwendet werden und an den Aussparungen ausgebildet sind.

10. Der Fadenmähkopf nach Anspruch 1, wobei die automatische Fadenfreigabeeinrichtung dazu ausgebildet ist, auf der Grundlage einer Änderung der wirksamen Länge des Mähfadens zwischen einem selbsttätigen Fadenfreigabezustand zum Ermöglichen einer Fadenfreigabe des Fadenmähkopfs und einem Mähzustand zum Verhindern der Fadenfreigabe des Fadenmähkopfs umzuschalten.

11. Der Fadenmähkopf nach Anspruch 1, wobei das Betätigungselement dazu ausgebildet ist, von dem Benutzer betätigt zu werden, um das Kopfgehäuse zum Rotieren anzutreiben.

12. Der Fadenmähkopf nach Anspruch 1, wobei das Betätigungselement dazu ausgebildet ist, von dem Benutzer betätigt zu werden, um die Spule zum Rotieren anzutreiben.

13. Der Fadenmähkopf nach Anspruch 1, wobei die automatische Fadenfreigabeeinrichtung ein Übertragungselement (231) umfasst, das zwischen einer ersten Position und einer zweiten Position umschaltbar ist, wobei, wenn sich das Übertragungselement in der ersten Position befindet, die automatische Fadenfreigabeeinrichtung eine Relativdrehung zwischen der Spule und dem Kopfgehäuse verhindert, und wenn sich das Übertragungselement in der zweiten Position befindet, die automatische Fadenfreigabeeinrichtung die Relativdrehung zwischen der Spule und dem Kopfgehäuse ermöglicht.

14. Der Fadenmähkopf nach Anspruch 13, wobei das Übertragungselement synchron mit der Spule rotiert und einen Antriebsabschnitt (231a) umfasst, um das Kopfgehäuse zum Rotieren anzutreiben, das Kopfgehäuse einen Zusammenwirkabschnitt (211) umfasst, der mit dem Antriebsabschnitt zusammenwirkt, das Kopfgehäuse ein oberes Gehäuse (21b) und ein unteres Gehäuse (21c) umfasst, und der Zusammenwirkabschnitt an einer unteren Seite des oberen Gehäuses angeordnet ist.

## Revendications

1. Une tête de coupe à fil (20), comprenant :
une bobine (22) autour de laquelle un fil de coupe (53) est apte à être enroulé ;
un boîtier de tête (21) ayant un espace de logement (210) apte à loger au moins une partie de la bobine ;
un dispositif automatique de libération du fil (23) configuré pour permettre à la bobine et au boîtier de tête de générer une première rotation relative de sorte que la tête de coupe à fil libère le fil de coupe, dans lequel le fil de coupe a une longueur efficace s'étendant hors de l'espace de logement ; et le dispositif automatique de libération du fil est en outre configuré pour faire en sorte que la tête de coupe à fil libère le fil de coupe lorsque la longueur efficace du fil de coupe est inférieure à une valeur prédéfinie ; et
un élément d'actionnement (24) configuré pour être actionné par un utilisateur afin de faire générer à la bobine et au boîtier de tête une seconde rotation relative de sorte que le fil de coupe soit enroulé autour de la bobine ;
la tête de coupe à fil (20) étant **caractérisée en ce que**
le boîtier de tête est pourvu d'un trou traversant (21d) le long d'un axe central (201), une partie de l'élément d'actionnement traverse le trou traversant et entre dans l'espace de logement du boîtier de tête, et l'élément d'actionnement tourne de manière synchrone avec la bobine.

2. La tête de coupe à fil selon la revendication 1, dans laquelle l'élément d'actionnement est fixé de manière fixe à la bobine.

3. La tête de coupe à fil selon la revendication 2, dans laquelle l'élément d'actionnement est fixe par rapport à la bobine dans une direction de l'axe central.

4. La tête de coupe à fil selon la revendication 1, dans laquelle l'élément d'actionnement est fixe par rapport au boîtier de tête dans une direction de l'axe central.

5. La tête de coupe à fil selon la revendication 1, dans laquelle la bobine est fixe par rapport au boîtier de tête dans une direction de l'axe central.

6. La tête de coupe à fil selon la revendication 1, dans laquelle lorsque la tête de coupe à fil est dans un état de la première rotation relative, la bobine tourne autour de l'axe central du boîtier de tête et par rapport au boîtier de tête selon une première direction, ou le boîtier de tête tourne autour de l'axe central et par rapport à la bobine selon la première direction ; et lorsque la tête de coupe à fil est dans un état de la seconde rotation relative, la bobine tourne autour de l'axe central et par rapport au boîtier de tête selon une seconde direction, ou le boîtier de tête tourne autour de l'axe central et par rapport à la bobine selon la seconde direction ; dans lequel la première direction est opposée à la seconde direction.

7. La tête de coupe à fil selon la revendication 1, dans laquelle l'élément d'actionnement comprend :
une portion d'actionnement (241) destinée à être tenue par l'utilisateur ;
une portion de contact (242) destinée à être en contact avec le sol lorsque la tête de coupe à fil coupe de l'herbe et fixée de manière fixe à la portion d'actionnement ; et
une portion de connexion (243) traversant au moins partiellement le trou traversant et logée dans l'espace de logement du boîtier de tête, dans laquelle une première extrémité (243a) de la portion de connexion est fixée de manière fixe à la portion de contact, et une seconde extrémité (243b) de la portion de connexion est fixée de manière fixe à la bobine.

8. La tête de coupe à fil selon la revendication 1, dans laquelle le boîtier de tête comprend une première structure de guidage (212) configurée pour guider le fil de coupe de sorte qu'il traverse le boîtier de tête sans entrer dans la bobine pendant l'enfilage, et la bobine comprend une seconde structure de guidage (223) configurée pour guider le fil de coupe afin qu'il quitte la première structure de guidage et soit enroulé autour de la bobine par la seconde rotation relative entre la bobine et le boîtier de tête pendant l'enroulement.

9. La tête de coupe à fil selon la revendication 8, dans laquelle la première structure de guidage comprend :
des encoches (212a) permettant au fil de coupe de pénétrer dans le boîtier de tête ou de sortir du boîtier de tête ;
une portion saillante (212b) utilisée pour former un canal d'enfilage pour guider le fil de coupe à travers le boîtier de tête, configurée pour être au moins deux arcs circulaires formés autour d'un trou traversant du boîtier de tête, et interrompue au niveau des encoches ; et
des portions de guidage (212g) utilisées pour guider le fil de coupe dans le boîtier de tête et formées au niveau des encoches.

10. La tête de coupe à fil selon la revendication 1, dans laquelle le dispositif automatique de libération du fil est configuré pour commuter entre un état de libération autonome du fil pour permettre une libération du fil de la tête de coupe à fil et un état de coupe pour empêcher une libération du fil de la tête de coupe à fil sur la base d'un changement de la longueur efficace du fil de coupe.

11. La tête de coupe à fil selon la revendication 1, dans laquelle l'élément d'actionnement est configuré pour être actionné par l'utilisateur afin d'entraîner le boîtier de tête en rotation.

12. La tête de coupe à fil selon la revendication 1, dans laquelle l'élément d'actionnement est configuré pour être actionné par l'utilisateur afin d'entraîner la bobine en rotation.

13. La tête de coupe à fil selon la revendication 1, dans laquelle le dispositif automatique de libération du fil comprend un élément de transmission (231) apte à commuter entre une première position et une seconde position, dans lequel lorsque l'élément de transmission est dans la première position, le dispositif automatique de libération du fil empêche une rotation relative entre la bobine et le boîtier de tête, et lorsque l'élément de transmission est dans la seconde position, le dispositif automatique de libération du fil permet la rotation relative entre la bobine et le boîtier de tête.

14. La tête de coupe à fil selon la revendication 13, dans laquelle l'élément de transmission tourne de manière synchrone avec la bobine et comprend une portion d'entraînement (231a) destinée à entraîner le boîtier de tête en rotation, le boîtier de tête comprend une portion coopérante (211) coopérant avec la portion d'entraînement, le boîtier de tête comprend un boîtier supérieur (21b) et un boîtier inférieur (21c), et la portion coopérante est disposée sur un côté inférieur du boîtier supérieur.
